# EUROPEAN PATENT APPLICATION

(11) **EP 4 694 262 A1**
(43) Date of publication of application: **11.02.2026**
(21) Application number: 25193659.7
(22) Date of filing: 04.08.2025
(51) Int. Cl.: H04W 12/06, H04W 12/084, H04L 9/40, H04W 4/021

(54) **METHOD AND APPARATUS FOR ACCESSING INFORMATION ABOUT SPATIAL ANCHOR**

(30) Priority: 04.08.2024 WO PCT/CN2024/109680
(71) Applicant: Nokia Technologies Oy, 02610 Espoo (FI)
(72) Inventor: GEORGE, Jos, 682024 Kochi (IN); BRAHMAIAH, Topuri, 560037 Bangalore (IN); MAKHAM, Mallikarjunudu, 560064 Bangalore (IN); BOMMISETTY, Sireesha, 560077 Bangalore (IN); KHARE, Saurabh, 560043 Bangalore (IN); PING, Jing, Chengdu, 111111 (CN)
(74) Representative: Samson & Partner Patentanwälte mbB

(57) **Abstract**

Embodiments of the present disclosure provide a method and apparatus for accessing information about spatial anchor. A method (400) performed by a first apparatus for accessing information about at least one spatial anchor may comprise: transmitting (S402), to a second apparatus, a first request for an authorization to access information about the at least one spatial anchor; receiving (S404), from the second apparatus, a first response indicating the authorization; transmitting (S406), to a third apparatus, a second request based at least on the authorization, for accessing information about at least one spatial anchor; and receiving (S408), from the third apparatus, a second response.

## Description

### TECHNICAL FIELD

Various example embodiments of the present disclosure relate generally to the technology of communication, and in particular to a method and apparatus for accessing information about spatial anchor.

### BACKGROUND

In communication networks, more and more new services and architectures are introduced. For example, spatial anchors are deployed as an association between a location in space (three dimensions) and service information that can be used to identify and access services.

How to access information about spatial anchor by any user in security is a very important issue.

### SUMMARY

This summary is provided to introduce some aspects in a simplified form that are further described below in the detailed description. This summary is not intended to identify key features or essential features of the claimed subject matter, nor is it intended to be used to limit the scope of the claimed subject matter.

Certain aspects of the present disclosure and their embodiments may provide solutions to these or other challenges. There are, proposed herein, various embodiments which address one or more of the issues disclosed herein. Specific method and apparatus for accessing information about spatial anchor may be provided.

A first aspect of the present disclosure provides a method performed by a first apparatus for accessing information about at least one spatial anchor. The method comprises: transmitting, to a second apparatus, a first request for an authorization to access information about the at least one spatial anchor; receiving, from the second apparatus, a first response indicating the authorization; transmitting, to a third apparatus, a second request based at least on the authorization, for accessing information about at least one spatial anchor; and receiving, from the third apparatus, a second response.

In exemplary embodiments of the present disclosure, the first response comprises an authorization code, and/or an access token. The first request and/or the second request includes at least one of: an identity of the first apparatus, an operation to the at least one spatial anchor, an identity of the at least one spatial anchor, a location area of interest, a user preference, and/or information for filter.

In exemplary embodiments of the present disclosure, the first response further comprises an identity token. The identity token comprises: information about the first apparatus and/or information about a metaverse service related to a spatial anchor.

In exemplary embodiments of the present disclosure, the second request is for discovering and/or managing the at least one spatial anchor. The second apparatus stores a list of spatial anchor identities mapped for the first apparatus, and/or a user represented by the first apparatus.

In exemplary embodiments of the present disclosure, the second request is for a management of information about the at least one spatial anchor. The management comprises at least one operation of: creating, reading, updating, and/or deleting.

In exemplary embodiments of the present disclosure, the authentication is an open identity connect, OIDC, authentication. The authentication is from a common application program interface framework for 3rd generation partnership project northbound application program interface, CAPIF, core function.

In exemplary embodiments of the present disclosure, when the first response comprises the authorization code, the first apparatus transmits, to the second apparatus, a third request including the authorization code. The first apparatus receives, from the second apparatus, a third response including the access token based at least on the authorization code. The second request includes the access token.

In exemplary embodiments of the present disclosure, when the first response comprises an authorization code, the first apparatus transmits the authorization code to a fourth apparatus. The fourth apparatus transmits the authorization code to the second apparatus. The fourth apparatus receives the access token from the second apparatus.

In exemplary embodiments of the present disclosure, when the first response comprises the access token, the second request comprises the access token. The first apparatus comprises: a vertical application layer user equipment, VAL UE, and the fourth apparatus comprises: a VAL server.

In exemplary embodiments of the present disclosure, the access token comprises at least one of: an expiration time, an authentication scope, and/or an identity of the first apparatus.

In exemplary embodiments of the present disclosure, the access token further comprises at least one of: at least one list of spatial anchor identities allowed for the first apparatus to access, at least one allowed location and orientation of the first apparatus, a validity period of a spatial anchor, an indication of a metaverse service associated to a spatial anchor, an allowed type of a spatial anchor, an allowed discoverable visibility level of a spatial anchor, and/or an access level of the first apparatus.

In exemplary embodiments of the present disclosure, the third apparatus validates the access token by checking at least one of: whether a location and/or an orientation of the first apparatus to a spatial anchor to be accessed by the first apparatus is allowed; whether the spatial anchor to be accessed by the first apparatus is inside an allowed location.

In exemplary embodiments of the present disclosure, the third apparatus validates the access token by further checking at least one of: a validity of an access token for the spatial anchor to be accessed by the first apparatus; a security dependency of the spatial anchor to be accessed by the first apparatus to at least one metaverse service; a version of the spatial anchor to be accessed by the first apparatus; and/or a metadata keyword in the access token.

In exemplary embodiments of the present disclosure, the third apparatus validates the access token by further checking at least one of: an issuer of the access token, an authorization scope of the first apparatus, an identity of the first apparatus, and/or an access control rule associated with the at least spatial anchor.

In exemplary embodiments of the present disclosure, the first apparatus comprises at least one of: a vertical application layer user equipment, VAL UE, a service enabler architecture layer for verticals identity management client, SIM-C, a vertical application layer server, VAL server, a mobile metaverse enabler client, MMEC, and/or a service enabler architecture layer for verticals client, SEAL-C. The second apparatus comprises: a service enabler architecture layer for verticals identity management server, SIM-S, and/or a CAPIF core function. The third apparatus comprises: a mobile metaverse enabler server, MMES, or a service enabler architecture layer for verticals server, SEAL-S.

A second aspect of the present disclosure provides a method performed by a second apparatus for authorizing a first apparatus to access information about at least one spatial anchor. The method comprises: receiving, from the first apparatus, a first request for an authorization to access information about the at least one spatial anchor; and transmitting, to the first apparatus, a first response indicating the authorization. The first apparatus transmits, to a third apparatus, a second request based on at least the authorization, for accessing information about at least one spatial anchor.

In exemplary embodiments of the present disclosure, the first response comprises an authorization code, and/or an access token. The first request and/or the second request includes at least one of: an identity of the first apparatus, an operation to the at least one spatial anchor, an identity of the at least one spatial anchor, a location area of interest, a user preference, and/or information for filter.

In exemplary embodiments of the present disclosure, the first response further comprises an identity token. The identity token comprises: information about the first apparatus and/or information about a metaverse service related to a spatial anchor.

In exemplary embodiments of the present disclosure, the second request is for discovering and/or managing the at least one spatial anchor. The second apparatus stores a list of spatial anchor identities mapped for the first apparatus, and/or a user represented by the first apparatus.

In exemplary embodiments of the present disclosure, the second request is for a management of information about the at least one spatial anchor. The management comprises at least one operation of: creating, reading, updating, and/or deleting.

In exemplary embodiments of the present disclosure, the authentication is an open identity connect, OIDC, authentication. The authentication is an authentication from a common application program interface framework for 3rd generation partnership project northbound application program interface, CAPIF, core function.

In exemplary embodiments of the present disclosure, when the first response comprises the authorization code, the first apparatus transmits, to the second apparatus, a third request including the authorization code. The first apparatus receives, from the second apparatus, a third response including the access token based at least on the authorization code. The second request includes the access token.

In exemplary embodiments of the present disclosure, when the first response comprises an authorization code, the first apparatus transmits the authorization code to a fourth apparatus. The fourth apparatus transmits the authorization code to the second apparatus. The fourth apparatus receives the access token from the second apparatus. The first apparatus comprises: a vertical application layer user equipment, VAL UE, and the fourth apparatus comprises: a VAL server.

In exemplary embodiments of the present disclosure, when the first response comprises the access token, the second request comprises the access token.

In exemplary embodiments of the present disclosure, the access token comprises at least one of: an expiration time, an authentication scope, and/or an identity of the first apparatus.

In exemplary embodiments of the present disclosure, the access token further comprises at least one of: at least one list of spatial anchor identities allowed for the first apparatus to access, at least one allowed location and orientation of the first apparatus, a validity period of a spatial anchor, an indication of a metaverse service associated to a spatial anchor, an allowed type of a spatial anchor, an allowed discoverable visibility level of a spatial anchor, and/or an access level of the first apparatus.

In exemplary embodiments of the present disclosure, the first apparatus comprises at least one of: a vertical application layer user equipment, VAL UE, a service enabler architecture layer for verticals identity management client, SIM-C, a vertical application layer server, VAL server, a mobile metaverse enabler client, MMEC, and/or a service enabler architecture layer for verticals client, SEAL-C. The second apparatus comprises: a service enabler architecture layer for verticals identity management server, SIM-S, and/or a CAPIF core function. The third apparatus comprises: a mobile metaverse enabler server, MMES, or a service enabler architecture layer for verticals server, SEAL-S.

A third aspect of the present disclosure provides a method performed by a third apparatus for managing information about at least one spatial anchor. The method comprises: receiving, from a first apparatus, a second request based on at least an authorization to access information about the at least one spatial anchor, for accessing information about at least one spatial anchor; and transmitting, to the first apparatus, a second response. The first apparatus transmits, to a second apparatus, a first request for the authorization. The first apparatus receives, from the second apparatus, a first response indicating the authorization.

In exemplary embodiments of the present disclosure, the first response comprises an authorization code, and/or an access token. The first request and/or the second request includes at least one of: an identity of the first apparatus, an operation to the at least one spatial anchor, an identity of the at least one spatial anchor, a location area of interest, a user preference, and/or information for filter.

In exemplary embodiments of the present disclosure, the first response further comprises an identity token. The identity token comprises: information about the first apparatus and/or information about a metaverse service related to a spatial anchor.

In exemplary embodiments of the present disclosure, the second request is for discovering and/or managing the at least one spatial anchor. The second apparatus stores a list of spatial anchor identities mapped for the first apparatus, and/or a user represented by the first apparatus.

In exemplary embodiments of the present disclosure, the second request is for a management of information about the at least one spatial anchor. The management comprises at least one operation of: creating, reading, updating, and/or deleting.

In exemplary embodiments of the present disclosure, the authentication is an open identity connect, OIDC, authentication. The authentication is an authentication from a common application program interface framework for 3rd generation partnership project northbound application program interface, CAPIF, core function.

In exemplary embodiments of the present disclosure, when the first response comprises the authorization code, the first apparatus transmits, to the second apparatus, a third request including the authorization code. The first apparatus receives, from the second apparatus, a third response including the access token based at least on the authorization code. The second request includes the access token.

In exemplary embodiments of the present disclosure, when the first response comprises an authorization code, the first apparatus transmits the authorization code to a fourth apparatus. The fourth apparatus transmits the authorization code to the second apparatus. The fourth apparatus receives the access token from the second apparatus. The first apparatus comprises: vertical application layer user equipment, VAL UE, and the fourth apparatus comprises: a VAL server.

In exemplary embodiments of the present disclosure, when the first response comprises the access token, the second request comprises the access token.

In exemplary embodiments of the present disclosure, the access token comprises at least one of: an expiration time, an authentication scope, and/or an identity of the first apparatus.

In exemplary embodiments of the present disclosure, the access token further comprises at least one of: at least one list of spatial anchor identities allowed for the first apparatus to access, at least one allowed location and orientation of the first apparatus, a validity period of a spatial anchor, an indication of a metaverse service associated to a spatial anchor, an allowed type of a spatial anchor, an allowed discoverable visibility level of a spatial anchor, and/or an access level of the first apparatus.

In exemplary embodiments of the present disclosure, the third apparatus validates the access token by checking at least one of: whether a location and/or an orientation of the first apparatus to a spatial anchor to be accessed by the first apparatus is allowed; whether the spatial anchor to be accessed by the first apparatus is inside an allowed location.

In exemplary embodiments of the present disclosure, the third apparatus validates the access token by further checking at least one of: a validity of an access token for the spatial anchor to be accessed by the first apparatus; a security dependency of the spatial anchor to be accessed by the first apparatus to at least one metaverse service; a version of the spatial anchor to be accessed by the first apparatus; and/or a metadata keyword in the access token.

In exemplary embodiments of the present disclosure, the third apparatus validates the access token by further checking at least one of: an issuer of the access token, an authorization scope of the first apparatus, an identity of the first apparatus, and/or an access control rule associated with the at least spatial anchor.

In exemplary embodiments of the present disclosure, the first apparatus comprises at least one of: a vertical application layer user equipment, VAL UE, a service enabler architecture layer for verticals identity management client, SIM-C, a vertical application layer server, VAL server, a mobile metaverse enabler client, MMEC, and/or a service enabler architecture layer for verticals client, SEAL-C. The second apparatus comprises: a service enabler architecture layer for verticals identity management server, SIM-S, and/or a CAPIF core function. The third apparatus comprises: a mobile metaverse enabler server, MMES, or a service enabler architecture layer for verticals server, SEAL-S.

A fourth aspect of the present disclosure provides a first apparatus for accessing information about at least one spatial anchor, comprising: at least one processor; and at least one memory including computer program code. The at least one memory and the computer program code configured to, with the at least one processor, cause the first apparatus at least to perform the method according to any of embodiments of the first aspect.

A fifth aspect of the present disclosure provides a second apparatus for authorizing a first apparatus to access information about at least one spatial anchor, comprising: at least one processor; and at least one memory including computer program code. The at least one memory and the computer program code configured to, with the at least one processor, cause the second apparatus at least to perform the method according to any of embodiments of the second aspect.

A sixth aspect of the present disclosure provides a third apparatus for managing information about at least one spatial anchor, comprising: at least one processor; and at least one memory including computer program code. The at least one memory and the computer program code configured to, with the at least one processor, cause the third apparatus at least to perform the method according to any of embodiments of the third aspect.

A seventh aspect of the present disclosure provides a computer-readable storage medium storing instructions, which when executed by at least one processor of an apparatus, cause the at least one processor of the apparatus to perform at least the method according to any of embodiments of the first aspect, the second aspect and/or the third aspect.

According to embodiments of the present disclosure, the exemplary embodiments of the present disclosure propose a mechanism that provides specifical mechanism for accessing information about spatial anchor.

According to embodiments of the present disclosure, an authorization for accessing information about the spatial anchor is needed. The security of metaverse service may be improved.

### BRIEF DESCRIPTION OF DRAWINGS

The above and other aspects, features, and benefits of various embodiments of the present disclosure will become more fully apparent, by way of example, from the following detailed description with reference to the accompanying drawings, in which like reference numerals or letters are used to designate like or equivalent elements. The drawings are illustrated for facilitating better understanding of the embodiments of the disclosure and not necessarily drawn to scale, in which:
FIG. 1 is a diagram showing a spatial anchor discovery procedure, as described in 3GPP TR 23.700-21.
FIG. 2 is a diagram showing a procedure to create a spatial anchor, as described in Figure 7.2.3.1-1 of 3GPP TR 23.700-21.
FIG. 3 is a diagram showing a procedure to update a spatial anchor, as described in Figure 7.2.3.2-1 of 3GPP TR 23.700-21.
FIG. 4 is a flow chart for method performed by a first apparatus for accessing information about at least one spatial anchor, according to embodiments of the present disclosure.
FIG. 5 is a flow chart for method performed by a second apparatus for authorizing a first apparatus to access information about at least one spatial anchor, according to embodiments of the present disclosure.
FIG. 6 is a flow chart for method performed by a third apparatus for managing information about at least one spatial anchor, according to embodiments of the present disclosure.
FIG. 7 is a diagram showing VAL UE (SIM-C/VAL-C)/VAL Server authentication, according to embodiments of present disclosure.
FIG. 8 is a diagram showing a spatial anchor discovery procedure, according to embodiments of the present disclosure.
FIG. 9 is a diagram showing a procedure for a VAL Server authorized to manage spatial anchor stored in SEAL-S, according to embodiments of the present disclosure.
FIG. 10 is a block diagram showing an exemplary structure for a first apparatus for accessing information about at least one spatial anchor, according to exemplary embodiments of the present disclosure.
FIG. 11 is a block diagram showing an exemplary structure for a second apparatus for authorizing a first apparatus to access information about at least one spatial anchor, according to exemplary embodiments of the present disclosure.
FIG. 12 is a block diagram showing an exemplary structure for a third apparatus for managing information about at least one spatial anchor, according to exemplary embodiments of the present disclosure.
FIG. 13 is a block diagram showing an apparatus/computer readable storage medium, according to embodiments of the present disclosure.
FIG. 14 is a block diagram showing exemplary apparatus units for a first apparatus for accessing information about at least one spatial anchor, which is suitable for performing the method according to embodiments of the disclosure.
FIG. 15 is a block diagram showing exemplary apparatus units for a second apparatus for authorizing a first apparatus to access information about at least one spatial anchor, which is suitable for performing the method according to embodiments of the disclosure.
FIG. 16 is a block diagram showing exemplary apparatus units for a third apparatus for managing information about at least one spatial anchor, which is suitable for performing the method according to embodiments of the disclosure.

### DETAILED DESCRIPTION

The embodiments of the present disclosure are described in detail with reference to the accompanying drawings. It should be understood that these embodiments are discussed only for better understanding, rather than limitations on the scope of the present disclosure. The described features, advantages, and characteristics of the disclosure may be combined in any suitable manner in one or more embodiments.

Generally, all terms used herein are to be interpreted according to their ordinary meaning in the relevant technical field, unless a different meaning is clearly given and/or is implied from the context in which it is used. The steps of any methods disclosed herein do not have to be performed in the exact order disclosed, unless clearly given and/or implied from the context. Any feature of any of the embodiments disclosed herein may be applied to any other embodiment, wherever appropriate.

As used herein, the term "network" or "communication network" refers to a network following any suitable communication standards (such for an internet network, or any wireless network). For example, wireless communication standards may comprise Wireless Local Area Network (WLAN), new radio (NR), long term evolution (LTE), LTE-Advanced, 5G NR, 6G etc. In the following description, the terms "network" and "system" can be used interchangeably.

The term "node/network node" refers to a computing device or computing entity or computing function or any other devices (physical or virtual) in a communication network. For example, the node in the network may include a base station (BS), an access point (AP), or any other suitable device in a wireless communication network. The BS may be, for example, a node B (NodeB or NB), an evolved NodeB (eNodeB or eNB), a next generation NodeB (gNodeB or gNB), a remote radio unit (RRU), a radio header (RH), a remote radio head (RRH), a relay, a low power node such as a femto, a pico, and so forth. Further, the node may include other core network node, such as an Access and Mobility Management Function, AMF, a Session Management Function, SMF, a User Plane Function, UPF, a mobility management entity, MME, or a serving gateway, S-GW, etc.

The term "terminal device" refers to any end device that can access a communication network and receive services therefrom. By way of example and not limitation, the terminal device refers to a mobile terminal, user equipment (UE), a non-AP device (such as a non-AP Station (STA)), or other suitable devices. The terminal device may include, but not limited to, a mobile phone, a cellular phone, a smart phone, a wearable device, a vehicle-mounted wireless terminal device, a vehicle, and the like.

As one example, a terminal device may represent a device configured for communication in accordance with one or more communication standards promulgated by any standard organization, such as 3^{rd} generation partnership project, 3GPP.

As yet another example, in an Internet of Things (IoT) scenario, a terminal device may represent a machine or other device that performs monitoring and/or measurements, and transmits the results of such monitoring and/or measurements to another terminal device and/or network equipment. Particular examples of such machines or devices are sensors, metering devices such as power meters, industrial machinery, or home or personal appliances, for example refrigerators, televisions, personal wearables such as watches etc. In other scenarios, a terminal device may represent a vehicle or other equipment that is capable of monitoring and/or reporting on its operational status or other functions associated with its operation.

It shall be understood that although the terms "first" and "second" etc. may be used herein to describe various elements, these elements should not be limited by these terms. These terms are only used to distinguish one element from another. For example, a first element could be termed a second element, and similarly, a second element could be termed a first element, without departing from the scope of example embodiments. As used herein, the term "and/or" includes any and all combinations of one or more of the associated listed terms.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

At least one object of embodiments of the present disclosure is improving security aspects of application enablement architecture for mobile metaverse services over 3GPP networks. As part of the study, spatial anchors as "an association between a location in space (three dimensions) and service information that can be used to identify and access services, e.g. information to access AR (Augmented reality) media content" is considered. Application providers can use spatial anchors to associate application content and services with location information which can be managed by the 3GPP (3rd generation partnership project) system. In turn, spatial anchors can be used by application clients to discover and access application content and services in a location aware fashion.

SA6 ( 3GPP TSGSA WG 6) already supports SEAL (Service Enabler Architecture Layer for Verticals) layer. SA6 can enhance the existing SEAL capability (like location management) to enable support for spatial anchor.

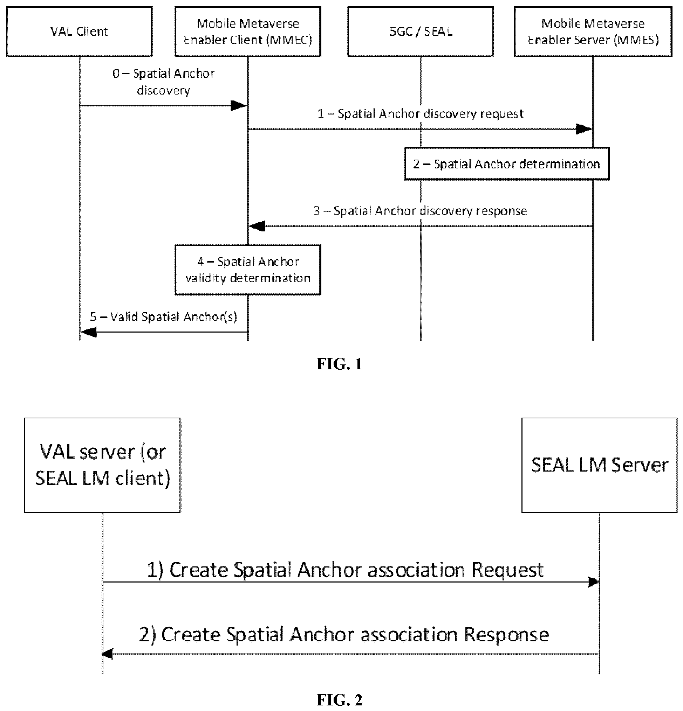

FIG. 1 is a diagram showing a spatial anchor discovery procedure, as described in 3GPP TR 23.700-21.

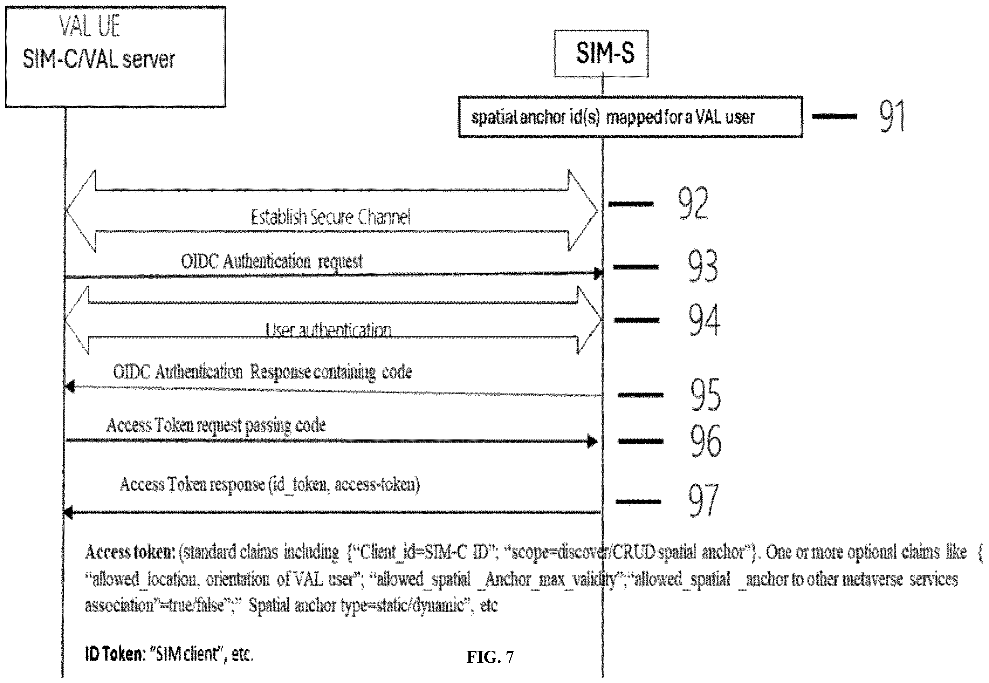

In 3GPP TR 23.700-21 V0.2.0 (2024-02) Solution for spatial anchor discovery is described with reference to figure 7.1.1.2-1.

This solution tackles consumer discovery of spatial anchors in the mobile metaverse. VAL UE (VAL Client) sends discovery requests through the MMEC/SEAL-C, specifying their location, desired services, and preferences. The MMEC forwards the request to the MMES /SEAL-S for authorization verification and filtering based on access control rules. The MMES also performs validity checks based on the user's location, potentially using network location services or SEAL Location Management APIs. If successful, the MMES/SEAL-S sends a response with discovered and recommended spatial anchors, and the MMEC evaluates their validity before providing them to the VAL client for accessing associated services. This approach offers secure discovery with user authorization and context-aware filtering, potentially enhancing the mobile metaverse experience.

The above document (3GPP TR 23.700-21) also describes a solution for support for spatial anchor management.

FIG. 2 is a diagram showing a procedure to create a spatial anchor, as described in Figure 7.2.3.1-1 of 3GPP TR 23.700-21.

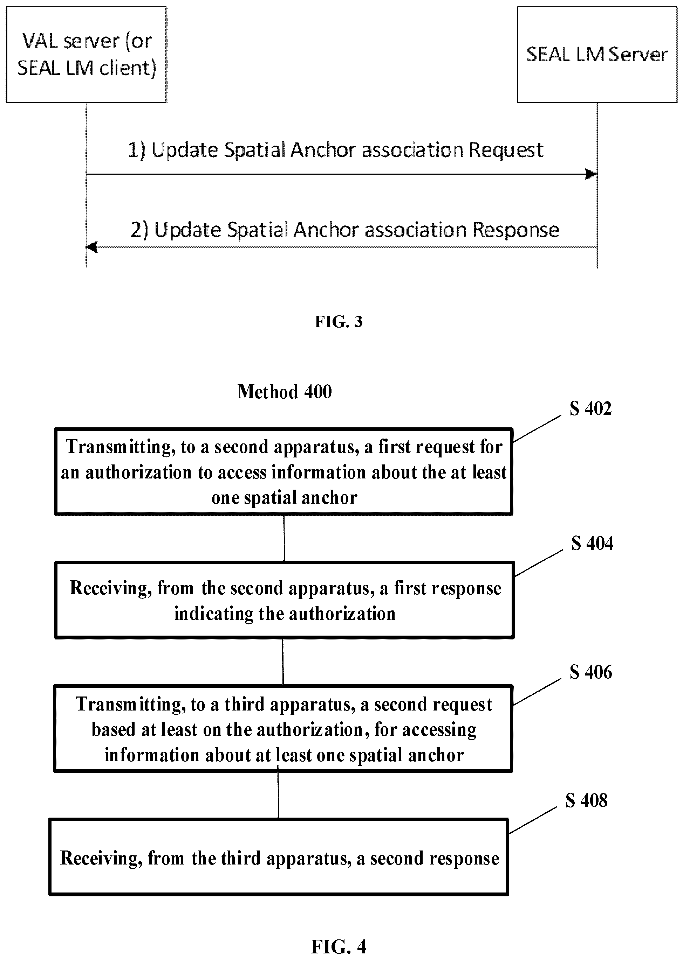

FIG. 3 is a diagram showing a procedure to update a spatial anchor, as described in Figure 7.2.3.2-1 of 3GPP TR 23.700-21.

These solutions expand the SEAL (Service Enabler Architecture Layer for Verticals) service to manage spatial anchors for metaverse applications. Both VAL servers and UE can leverage a SEAL client to create, read, update, and delete spatial anchors. The SEAL LM (Location Management) server stores and manages these anchors, associating them with locations and enforcing access control rules. This enables users to discover and interact with relevant digital information linked to real-world locations within the metaverse.

A few solutions were introduced in the above concept document (e.g., 3GPP TR 23.700-21) for securely digital asset management and metaverse service authentication and authentication. However, the solutions assumed the UE (user equipment) would generate token for authentication and authentication, especially for an avatar representing a user.

SA6 (3GPP TSG SA WG6) concluded a new KI (Key Issue) in Rel19 for spatial anchor/map management and discovery, which based on existing SEAL framework, hence this solution proposed security solution to align with existing SEAL and CAPIF (Common Application programming interface Framework for 3GPP Northbound Application programming interfaces) frameworks.

However, it still needs to enhance the spatial anchor management procedure with security aspects. There are below security related problem statements to be addressed with respect to spatial anchor discovery and other CRUD (create/update/delete) operations.

It is to enable support for managing spatial anchors.
- Secure CURD operation of spatial anchors by the consumer (e.g. UE, VAL server) to be further enhanced. It is to be studied how to ensure that only authorized consumer (e.g. UE, VAL server) is allowed to discover the spatial anchor details or create/update/delete spatial anchor and map.
- While SA6 enhancing existing seal capabilities to enable support for spatial anchor to support CRUD operations for spatial anchors (association between location and service information on customer premises), considerations for secure operations need further definition in standards.

FIG. 4 is a flow chart for method performed by a first apparatus for accessing information about at least one spatial anchor, according to embodiments of the present disclosure.

As shown in FIG. 4, the method 400 comprises: a step S402, transmitting, to a second apparatus, a first request for an authorization to access information about the at least one spatial anchor; a step S404, receiving, from the second apparatus, a first response indicating the authorization; a step S406, transmitting, to a third apparatus, a second request based at least on the authorization, for accessing information about at least one spatial anchor; and a step S408, receiving, from the third apparatus, a second response.

According to embodiments of the present disclosure, the exemplary embodiments of the present disclosure propose a mechanism that provides specifical mechanism for accessing information about spatial anchor. According to embodiments of the present disclosure, an authorization for accessing information about the spatial anchor is needed. The security of metaverse service may be improved.

In exemplary embodiments of the present disclosure, the first response comprises an authorization code, and/or an access token. The first request and/or the second request includes at least one of: an identity of the first apparatus, an operation to the at least one spatial anchor, an identity of the at least one spatial anchor, a location area of interest, a user preference, and/or information for filter. For example, the information for filter may include at least one metadata keyword.

According to embodiments of the present disclosure, authorization code, and/or an access token may be used for providing different authentication procedures.

In exemplary embodiments of the present disclosure, the first response further comprises an identity token. The identity token comprises: information about the first apparatus and/or information about a metaverse service related to a spatial anchor.

In exemplary embodiments of the present disclosure, the second request is for discovering and/or managing the at least one spatial anchor. The second apparatus stores a list of spatial anchor identities mapped for the first apparatus, and/or a user represented by the first apparatus.

In exemplary embodiments of the present disclosure, the second request is for a management of information about the at least one spatial anchor. The management comprises at least one operation of: creating, reading, updating, and/or deleting.

According to embodiments of the present disclosure, the procedures for discovering and/or CRUD may be enhanced.

In exemplary embodiments of the present disclosure, the authentication is an open identity connect, OIDC, authentication. The authentication is from a common application program interface framework for 3rd generation partnership project northbound application program interface, CAPIF, core function.

In exemplary embodiments of the present disclosure, when the first response comprises the authorization code, the first apparatus transmits, to the second apparatus, a third request including the authorization code. The first apparatus receives, from the second apparatus, a third response including the access token based at least on the authorization code. The second request includes the access token.

In exemplary embodiments of the present disclosure, when the first response comprises an authorization code, the first apparatus transmits the authorization code to a fourth apparatus. The fourth apparatus transmits the authorization code to the second apparatus. The fourth apparatus receives the access token from the second apparatus. The first apparatus comprises: a vertical application layer user equipment, VAL UE, and the fourth apparatus comprises: a VAL server.

In exemplary embodiments of the present disclosure, when the first response comprises the access token, the second request comprises the access token.

According to embodiments of the present disclosure, different procedures are further provided.

In exemplary embodiments of the present disclosure, the access token comprises at least one of: an expiration time, an authentication scope, and/or an identity of the first apparatus.

In exemplary embodiments of the present disclosure, the access token further comprises at least one of: at least one list of spatial anchor identities allowed for the first apparatus to access, at least one allowed location and orientation of the first apparatus, a validity period of a spatial anchor, an indication of a metaverse service associated to a spatial anchor, an allowed type of a spatial anchor, an allowed discoverable visibility level of a spatial anchor, and/or an access level of the first apparatus.

In exemplary embodiments of the present disclosure, the third apparatus validates the access token by checking at least one of: whether a location and/or an orientation of the first apparatus to a spatial anchor to be accessed by the first apparatus is allowed; whether the spatial anchor to be accessed by the first apparatus is inside an allowed location.

In exemplary embodiments of the present disclosure, the third apparatus validates the access token by further checking at least one of: a validity of an access token for the spatial anchor to be accessed by the first apparatus; a security dependency of the spatial anchor to be accessed by the first apparatus to at least one metaverse service; a version of the spatial anchor to be accessed by the first apparatus; and/or a metadata keyword in the access token.

In exemplary embodiments of the present disclosure, the third apparatus validates the access token by further checking at least one of: an issuer of the access token, an authorization scope of the first apparatus, an identity of the first apparatus, and/or an access control rule associated with the at least spatial anchor.

According to embodiments of the present disclosure, the token may include different attributes and the third apparatus may check them accordingly.

In exemplary embodiments of the present disclosure, the first apparatus comprises at least one of: a vertical application layer user equipment, VAL UE, a service enabler architecture layer for verticals identity management client, SIM-C, a vertical application layer server, VAL server, a mobile metaverse enabler client, MMEC, and/or a service enabler architecture layer for verticals client, SEAL-C. The second apparatus comprises: a service enabler architecture layer for verticals identity management server, SIM-S, and/or a CAPIF core function. The third apparatus comprises: a mobile metaverse enabler server, MMES, or a service enabler architecture layer for verticals server, SEAL-S.

According to embodiments of the present disclosure, such procedures may be applicable to different entities and nodes in the communication network.

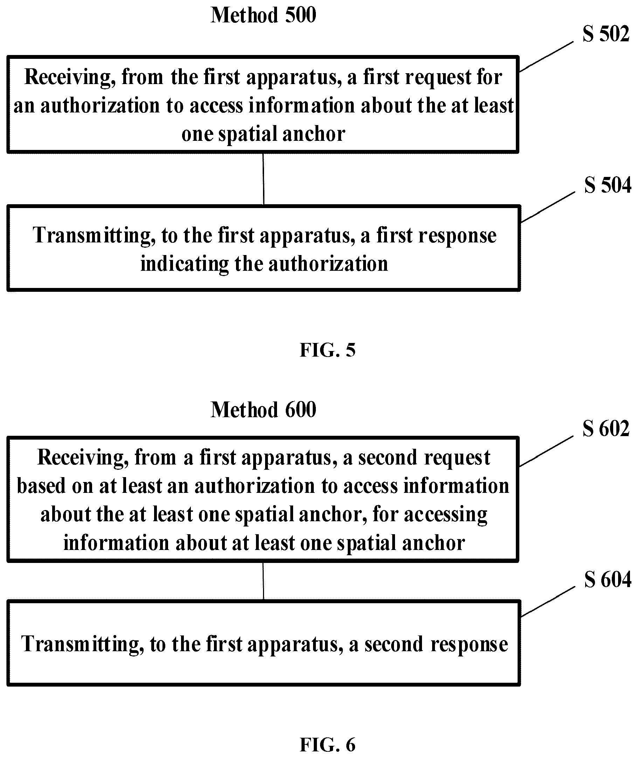

FIG. 5 is a flow chart for method performed by a second apparatus for authorizing a first apparatus to access information about at least one spatial anchor, according to embodiments of the present disclosure.

As shown in FIG. 5, the method 500 comprises: a step S502, receiving, from the first apparatus, a first request for an authorization to access information about the at least one spatial anchor; and a step S504, transmitting, to the first apparatus, a first response indicating the authorization. The first apparatus transmits, to a third apparatus, a second request based on at least the authorization, for accessing information about at least one spatial anchor.

In exemplary embodiments of the present disclosure, the first response comprises an authorization code, and/or an access token. The first request and/or the second request includes at least one of: an identity of the first apparatus, an operation to the at least one spatial anchor, an identity of the at least one spatial anchor, a location area of interest, a user preference, and/or information for filter.

In exemplary embodiments of the present disclosure, the first response further comprises an identity token. The identity token comprises: information about the first apparatus and/or information about a metaverse service related to a spatial anchor.

In exemplary embodiments of the present disclosure, the second request is for discovering and/or managing the at least one spatial anchor. The second apparatus stores a list of spatial anchor identities mapped for the first apparatus, and/or a user represented by the first apparatus.

In exemplary embodiments of the present disclosure, the second request is for a management of information about the at least one spatial anchor. The management comprises at least one operation of: creating, reading, updating, and/or deleting.

In exemplary embodiments of the present disclosure, the authentication is an open identity connect, OIDC, authentication. The authentication is an authentication from a common application program interface framework for 3rd generation partnership project northbound application program interface, CAPIF, core function.

In exemplary embodiments of the present disclosure, when the first response comprises the authorization code, the first apparatus transmits, to the second apparatus, a third request including the authorization code. The first apparatus receives, from the second apparatus, a third response including the access token based at least on the authorization code. The second request includes the access token.

In exemplary embodiments of the present disclosure, when the first response comprises an authorization code, the first apparatus transmits the authorization code to a fourth apparatus. The fourth apparatus transmits the authorization code to the second apparatus. The fourth apparatus receives the access token from the second apparatus. The first apparatus comprises: a vertical application layer user equipment, VAL UE, and the fourth apparatus comprises: a VAL server.

In exemplary embodiments of the present disclosure, when the first response comprises the access token, the second request comprises the access token.

In exemplary embodiments of the present disclosure, the access token comprises at least one of: an expiration time, an authentication scope, and/or an identity of the first apparatus.

In exemplary embodiments of the present disclosure, the access token further comprises at least one of: at least one list of spatial anchor identities allowed for the first apparatus to access, at least one allowed location and orientation of the first apparatus, a validity period of a spatial anchor, an indication of a metaverse service associated to a spatial anchor, an allowed type of a spatial anchor, an allowed discoverable visibility level of a spatial anchor, and/or an access level of the first apparatus.

In exemplary embodiments of the present disclosure, the first apparatus comprises at least one of: a vertical application layer user equipment, VAL UE, a service enabler architecture layer for verticals identity management client, SIM-C, a vertical application layer server, VAL server, a mobile metaverse enabler client, MMEC, and/or a service enabler architecture layer for verticals client, SEAL-C. The second apparatus comprises: a service enabler architecture layer for verticals identity management server, SIM-S, and/or a CAPIF core function. The third apparatus comprises: a mobile metaverse enabler server, MMES, or a service enabler architecture layer for verticals server, SEAL-S.

FIG. 6 is a flow chart for method performed by a third apparatus for managing information about at least one spatial anchor, according to embodiments of the present disclosure.

As shown in FIG. 6, the method 600 comprises: a step S602, receiving, from a first apparatus, a second request based on at least an authorization to access information about the at least one spatial anchor, for accessing information about at least one spatial anchor; and a step S604, transmitting, to the first apparatus, a second response. The first apparatus transmits, to a second apparatus, a first request for the authorization. The first apparatus receives, from the second apparatus, a first response indicating the authorization.

In exemplary embodiments of the present disclosure, the first response comprises an authorization code, and/or an access token. The first request and/or the second request includes at least one of: an identity of the first apparatus, an operation to the at least one spatial anchor, an identity of the at least one spatial anchor, a location area of interest, a user preference, and/or information for filter.

In exemplary embodiments of the present disclosure, the first response further comprises an identity token. The identity token comprises: information about the first apparatus and/or information about a metaverse service related to a spatial anchor.

In exemplary embodiments of the present disclosure, the second request is for discovering and/or managing the at least one spatial anchor. The second apparatus stores a list of spatial anchor identities mapped for the first apparatus, and/or a user represented by the first apparatus.

In exemplary embodiments of the present disclosure, the second request is for a management of information about the at least one spatial anchor. The management comprises at least one operation of: creating, reading, updating, and/or deleting.

In exemplary embodiments of the present disclosure, the authentication is an open identity connect, OIDC, authentication. The authentication is an authentication from a common application program interface framework for 3rd generation partnership project northbound application program interface, CAPIF, core function.

In exemplary embodiments of the present disclosure, when the first response comprises the authorization code, the first apparatus transmits, to the second apparatus, a third request including the authorization code. The first apparatus receives, from the second apparatus, a third response including the access token based at least on the authorization code. The second request includes the access token.

In exemplary embodiments of the present disclosure, when the first response comprises an authorization code, the first apparatus transmits the authorization code to a fourth apparatus. The fourth apparatus transmits the authorization code to the second apparatus. The fourth apparatus receives the access token from the second apparatus. The first apparatus comprises: vertical application layer user equipment, VAL UE, and the fourth apparatus comprises: a VAL server.

In exemplary embodiments of the present disclosure, when the first response comprises the access token, the second request comprises the access token.

In exemplary embodiments of the present disclosure, the access token comprises at least one of: an expiration time, an authentication scope, and/or an identity of the first apparatus.

In exemplary embodiments of the present disclosure, the access token further comprises at least one of: at least one list of spatial anchor identities allowed for the first apparatus to access, at least one allowed location and orientation of the first apparatus, a validity period of a spatial anchor, an indication of a metaverse service associated to a spatial anchor, an allowed type of a spatial anchor, an allowed discoverable visibility level of a spatial anchor, and/or an access level of the first apparatus.

In exemplary embodiments of the present disclosure, the third apparatus validates the access token by checking at least one of: whether a location and/or an orientation of the first apparatus to a spatial anchor to be accessed by the first apparatus is allowed; whether the spatial anchor to be accessed by the first apparatus is inside an allowed location.

In exemplary embodiments of the present disclosure, the third apparatus validates the access token by further checking at least one of: a validity of an access token for the spatial anchor to be accessed by the first apparatus; a security dependency of the spatial anchor to be accessed by the first apparatus to at least one metaverse service; a version of the spatial anchor to be accessed by the first apparatus; and/or a metadata keyword in the access token.

In exemplary embodiments of the present disclosure, the third apparatus validates the access token by further checking at least one of: an issuer of the access token, an authorization scope of the first apparatus, an identity of the first apparatus, and/or an access control rule associated with the at least spatial anchor.

In exemplary embodiments of the present disclosure, the first apparatus comprises at least one of: a vertical application layer user equipment, VAL UE, a service enabler architecture layer for verticals identity management client, SIM-C, a vertical application layer server, VAL server, a mobile metaverse enabler client, MMEC, and/or a service enabler architecture layer for verticals client, SEAL-C. The second apparatus comprises: a service enabler architecture layer for verticals identity management server, SIM-S, and/or a CAPIF core function. The third apparatus comprises: a mobile metaverse enabler server, MMES, or a service enabler architecture layer for verticals server, SEAL-S.

As such, exemplary embodiments of the present disclosure provide the authorization enhancements and security procedures needed in the management/CRUD operations, and discovery of spatial anchor managed by the SEAL Server (SEAL -S).

In the communication flow involving VAL UE (Seal Client/VAL Client) and SEAL-S (server), the UE receives Access token and ID (Identity/Identifier) Token with claims and scopes based on VAL UE's permission from SIM-S using OpenID Connect.
- Access tokens control user access to specific spatial anchor actions (discovery, CRUD operations).
- Additional attributes in the token may specify spatial anchor IDs, validity information, geographical boundaries, discoverability levels etc., according to the service requirement.
- The SEAL Server validates access tokens and check if user is accessing spatial anchor inside the allowed location specified by the token.
- It checks compatibility between requested anchors and user's associated metaverse services (avatars, assets) for security reasons.
- It selects appropriate anchor versions (not blacklisted, recent) and filters based on user-provided keywords.
- The ID token is consumed by the VAL UE to authenticate the VAL user and potentially provide context-specific information related to the accessed spatial anchor.

In the communication flow involving VAL Server to SEAL-S, CAPIF may be used to request access tokens for updating spatial anchors in the SEAL Server.
- Access tokens define user permissions (CRUD on specific anchors, service-level access). For example, to authorize a service information update on a spatial anchor managed by multiple service providers.
- The SEAL Server validates access tokens and performs additional authorization checks based on anchor access control rules. It ensures data format validity and provides informative error messages in case of issues.
- If all validations and checks pass, the SEAL Server processes the update and sends a success response to the VAL Server.

For example, solution may be related to below flows and enhancements.
- VAL user (UE) authorization for spatial anchor discovery (OIDC-based, adapted from TS 33.434 authorization framework).
- An example list of additional token attributes based on the spatial anchor service.
- An example spatial anchor discovery procedure, with security enhancement to Spatial anchor discovery flow described in TR 23.700-21, section 7.1.
- VAL Server authorized to manage spatial anchor in SEAL-S via CAPIF. An illustrative example for spatial anchor update from VAL server as per 3GPP TR 23.700-21 section "Support for spatial anchor management".

FIG. 7 is a diagram showing VAL UE (SIM-C/VAL-C)/VAL Server authentication, according to embodiments of present disclosure.

As a first example, without limitation, VAL/SEAL (UE) user authentication (adapting OIDC flow supporting VAL user authentication) are illustrated.

In a step 71, the SIM-S stores spatial anchor id(s) mapped for a VAL user.

In a step 72, a secure channel is established between the VAL UE/SIM-C/VAL server and SIM-S.

In a step 73, VAL UE/SIM-C/VAL server transmits an OIDC Authentication request to the SIM-S.

In a step 74, user authentication is performed.

In a step 75, VAL UE/SIM-C/VAL server receives an OIDC Authentication Response containing code.

In a step 76, VAL UE/SIM-C/VAL server transmits an Access Token request passing code.

In a step 77, VAL UE/SIM-C/VAL server receives an Access Token response (id_token, access-token).

Access token may include standard claims including {"Client_id=SIM-C ID"; "scope=discover/CRUD spatial anchor"}. One or more optional claims like { "allowed_location, orientation of VAL user"; "allowed_spatial_Anchor_max_validity";"allowed_spatial_anchor to other metaverse services association"=true/false";" Spatial anchor type=static/dynamic", etc.

ID Token may include information about "SIM client", etc.

According to such procedure, to discover a spatial anchor (as in FIG. 1), a VAL UE ((SIM-C /VAL Server) first obtains authorization from the SIM-S. This involves the VAL UE authenticating with the SIM-S using OIDC. Upon successful authentication, the UE receives authorization code which represented the metaverse service owner permitting the SEAL-C to access the metaverse services.

The UE then sends a request to the SIM-S, including details like the desired VAL service, user information, and the purpose (e.g., spatial anchor discovery) together with authorization code returned in the last step. The SIM-S verifies the request's validity and the user's permission to perform the action. In this case, the SIM-S checks if the VAL user has access to the requested spatial anchor (e.g., based on a mapping). If verification succeeds, the SIM-S issues Access token and/or ID token with the example scopes and additional claims.

Below Table shows an example of Access token claims issued for Spatial anchor.

| Access token standard claims | |
|---|---|
| Parameter | **Description** |
| Exp | REQUIRED. Implementers MAY provide for some small leeway, usually no more than a few minutes, to account for clock skew (not to exceed 30 seconds). |
| Scope | REQUIRED. A JSON (JavaScript object notation) string containing a space-separated list of the authorization scopes associated with this token. The scope(s) contained here reflect the requested scope(s) from the Authentication Request. For example, discover_spatial_anchor, spatial map and other spatial anchor API related additional scope can be included (need to add an abstract object name) |
| client_id | REQUIRED. The identifier of the SIM-C making the API request as previously registered with the SIM-S. |

Below table show an example about Additional authorization attributes based on the spatial anchor service.

| **Parameter** | **Description** |
|---|---|
| allowed_spatial_anchor_ids | OPTIONAL. A List of spatial anchor IDs that the VAL Client/VAL user is allowed to access. |
| allowed_location_orientation_of_VAL_user | OPTIONAL. Allowed location and orientation of the VAL user. |
| Allowed spatial_anchor_max_validity | OPTIONAL. Maximum Validity period of the spatial anchor |
| Allowed spatial_anchor_association | OPTIONAL. Boolean indicating if the spatial anchor can be associated with other metaverse services. |
| Allowed spatial_anchor_type | OPTIONAL. Allowed type of the spatial anchor (static/dynamic). |
| Allowed Spatial Anchor Discoverable Visibility Level | OPTIONAL:This controls how widely discoverable the spatial anchor is (e.g., private, shared within a group, universally discoverable). |

ID Token may have information about the VAL user and the metaverse service (spatial anchor) related information. The ID token is consumed by the VAL UE / VAL UE Client to authenticate the VAL user and potentially provide context-specific information related to the accessed spatial anchor.

In a scenario during the OIDC flow VAL UE receiving the authorization code can exchange it with VAL Server and VAL server in turn can exchange with SIM-S for access token, ID token and refresh token to improve the security of token exchange flow.

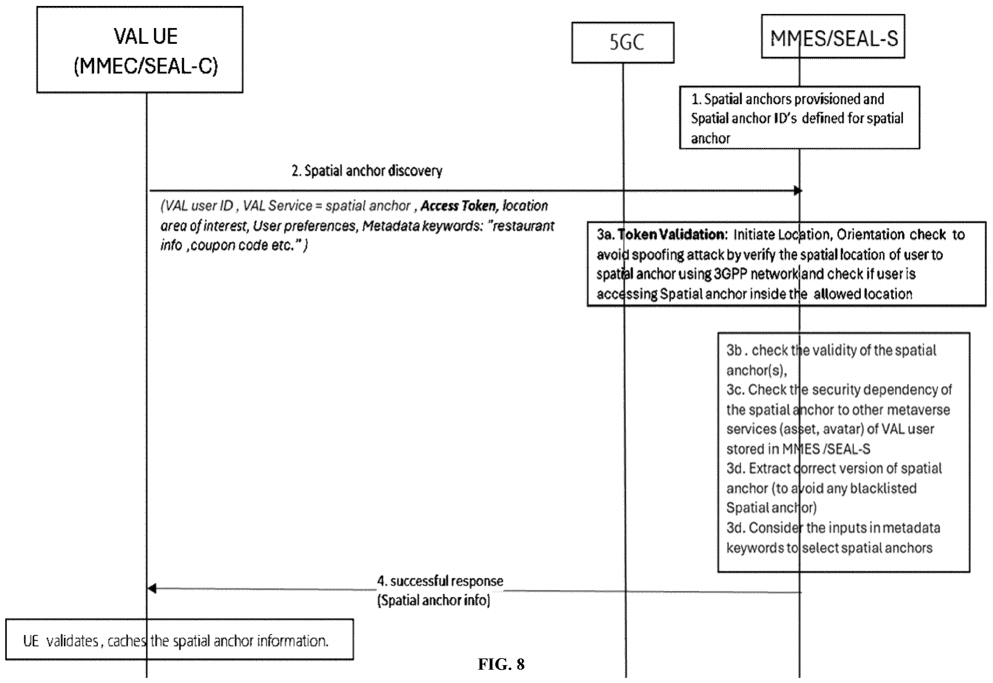

FIG. 8 is a diagram showing a spatial anchor discovery procedure, according to embodiments of the present disclosure, with security enhancement in Spatial anchor discovery flow described in TR 23.700-21, section 7.1.

With reference to FIG. 8, step by step flow is described as below.
1. The SEAL-S acts as the host for various metaverse services and maintain/manage spatial anchors alongside their versions.
2. VAL UE will initiate a spatial anchor discovery message using access token received in the authorization step. It also sends necessary information like desired metaverse service to be accessed (spatial anchor), location area of interest, and any metadata key word for filtering discoveries like restaurant information or items with coupon code etc.
3. SEAL-S will validate the token with below step.
   3a) To prevent spoofing attacks, the SEAL Server verifies the user's location against the spatial anchor's location using the 3GPP network. and check if user is accessing Spatial anchor inside the allowed location.
   3b) SEAL-S will check the validity of the spatial anchor(s), creation date, usage information etc. Lifespan (time): The spatial anchor hasn't expired or become obsolete, Validity: The creation date aligns with expectations (e.g., not created in the distant past). Potential Throttling: Usage information (if included) could be used to limit access attempts for overloaded spatial anchors.
   3c) The SEAL Server verifies compatibility between the requested spatial anchor and the VAL user's associated metaverse services (assets, avatars) stored in MMES/SEAL-S. For example, if the user's avatar occupies a security-sensitive area within the metaverse, access to the spatial anchor may be restricted to prevent potential security risks.
   3d) The SEAL-S selects the appropriate version of the spatial anchor, ensuring it's not blacklisted (meaning deactivated due to issues) and was created after a specific date/time (filtering out outdated versions)
   3e) The server considers the provided metadata keywords when selecting relevant spatial anchors. This helps refine the search based on user preferences.
4. If all checks pass, the SEAL-S sends a successful response to the VAL UE. The response might include details about the discovered spatial anchor and the associated metaverse service.

Then, UE may validate, and cache the spatial anchor information.

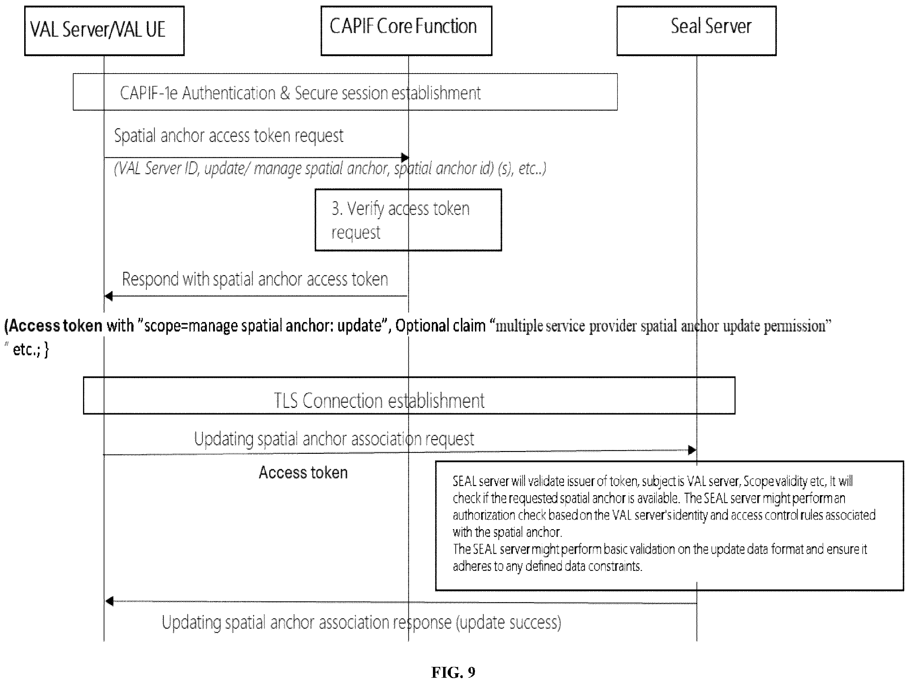

FIG. 9 is a diagram showing a procedure for a VAL Server authorized to manage spatial anchor stored in SEAL-S, according to embodiments of the present disclosure.

This section details the improved security measures for managing spatial anchors/CRUD operations of spatial anchor. We are illustrating this with an example call flow for updating spatial anchor adapted from 3GPP TR 23.700-21's "Support for spatial anchor management".

As described in FIG. 9, a CAPIF-1e authentication & secure session may be established between the VAL server/UE and the CAPIF Core Function.

The VAL server will send request to CAPIF Core function (CCF) to receive access token for authorization to update spatial anchor(s) stored in the seal server. The request may specify the desired action (request to update spatial anchor), list of anchors to be updated etc.

The CCF verifies the request's validity, and then issues an access token if authorized via a response. This token incorporates authorization attributes defining the user's access level.

For example, there may be following different levels.
- SEAL/VAL service level: e.g. permission to CRUD operations or discover spatial anchor.
- Spatial anchor instance level: permission to operate on specific spatial anchor id(s).
- 3rd party service level: e.g. if multiple service information (from different service provider) are included in a spatial anchor, authorization to update all or specific service information associated with a spatial anchor.

Further, TLS connection may be established between at least the VAL server/UE and the Searl Server.

Now the VAL Server, equipped with the access token, sends an update request to the SEAL Server. This request includes details about the spatial anchor association that needs updating.

The SEAL Server verifies the access token's validity, including the issuer (CCF), subject (VAL Server), and scope (matching the requested operation). The server checks if the requested spatial anchor exists within its database.
- The SEAL server might perform an authorization check based on the VAL server's identity and access control rules associated with the spatial anchor.
- The SEAL server might perform basic validation on the update data format and ensure it adheres to any defined data constraints.
- The SEAL server should provide informative error messages if any validation fails, specifying the reason for the failure.

If all validations and checks pass, the SEAL Server processes the update and sends a success response to the VAL Server.

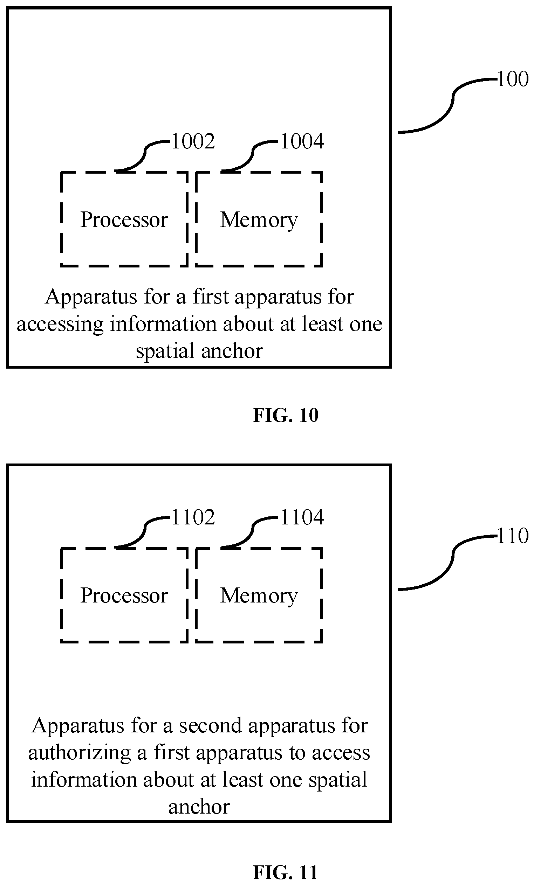

FIG. 10 is a block diagram showing an exemplary structure for a first apparatus for accessing information about at least one spatial anchor, according to exemplary embodiments of the present disclosure.

As shown in FIG. 10, an apparatus 100 for a first apparatus for accessing information about at least one spatial anchor comprises: at least one processor 1002; and at least one memory 1004 including computer program code. The at least one memory and the computer program code are configured to, with the at least one processor, cause the apparatus 100 for a first apparatus for accessing information about at least one spatial anchor at least to perform the method according to any of embodiments described above, such as shown in FIG. 4, 7, 8, 9.

FIG. 11 is a block diagram showing an exemplary structure for a second apparatus for authorizing a first apparatus to access information about at least one spatial anchor, according to exemplary embodiments of the present disclosure.

As shown in FIG. 11, an apparatus 110 for a second apparatus for authorizing a first apparatus to access information about at least one spatial anchor comprises: at least one processor 1102; and at least one memory 1104 including computer program code. The at least one memory and the computer program code are configured to, with the at least one processor, cause the apparatus 110 for a second apparatus for authorizing a first apparatus to access information about at least one spatial anchor at least to perform the method according to any of embodiments described above, such as shown in FIG. 5, 7, 8, 9.

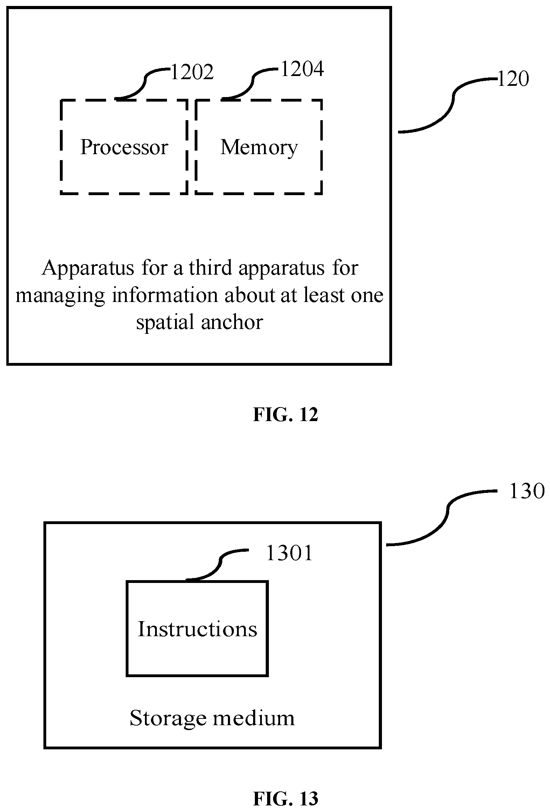

FIG. 12 is a block diagram showing an exemplary structure for a third apparatus for managing information about at least one spatial anchor, according to exemplary embodiments of the present disclosure.

As shown in FIG. 12, an apparatus 120 for a third apparatus for managing information about at least one spatial anchor comprises: at least one processor 1202; and at least one memory 1204 including computer program code. The at least one memory and the computer program code are configured to, with the at least one processor, cause the apparatus 120 for a third apparatus for managing information about at least one spatial anchor at least to perform the method according to any of embodiments described above, such as shown in FIG. 6, 7, 8, 9.

The processor 1002, 1102, 1202 may be any kind of processing component, such as one or more microprocessor or microcontrollers, as well as other digital hardware, which may include digital signal processors (DSPs), special-purpose digital logic, and the like. The memory 1004, 1104, 1204 may be any kind of storage component, such as read-only memory (ROM), random-access memory, cache memory, flash memory devices, optical storage devices, etc.

FIG. 13 is a block diagram showing an apparatus/computer readable storage medium, according to embodiments of the present disclosure.

As shown in FIG. 13, a computer-readable storage medium 130 storing instructions 1301, which when executed by at least one processor of a network node or a terminal device, cause the at least one processor of the network node or the terminal device to perform the method according to any of the embodiments above mentioned, such as shown in FIG. 4, 5, 6, 7, 8, 9.

In addition, the present disclosure may also provide a carrier containing the computer program/instructions as mentioned above. The carrier is one of an electronic signal, optical signal, radio signal, or the above computer readable storage medium. The computer readable storage medium can be, for example, an optical compact disk or an electronic memory device like a RAM (random access memory), a ROM (read only memory), Flash memory, magnetic tape, CD-ROM, DVD, Blue-ray disc and the like.

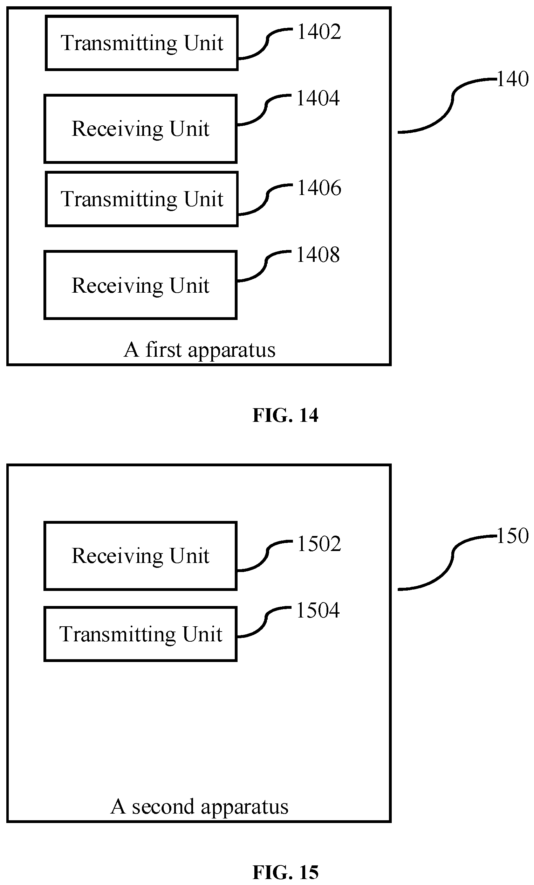

FIG. 14 is a block diagram showing exemplary apparatus units for a first apparatus for accessing information about at least one spatial anchor, which is suitable for performing the method according to embodiments of the disclosure.

As shown in FIG. 14, the a first apparatus 140 for accessing information about at least one spatial anchor may include: a transmitting unit 1402 configured for transmitting, to a second apparatus, a first request for an authorization to access information about the at least one spatial anchor; a receiving unit 1404 configured for receiving, from the second apparatus, a first response indicating the authorization; a transmitting unit 1406 configured for transmitting, to a third apparatus, a second request based at least on the authorization, for accessing information about at least one spatial anchor; and a receiving unit 1408 configured for receiving, from the third apparatus, a second response.

The transmitting unit 1402 and the transmitting unit 1406 may be the same or not. The receiving unit 1404 and the receiving unit 1408 may be the same or not.

In exemplary embodiments of the present disclosure, the first apparatus 140 for accessing information about at least one spatial anchor is further configured for performing the method according to any of the embodiments above mentioned, such as shown in FIG. 4, 7, 8, 9.

FIG. 15 is a block diagram showing exemplary apparatus units for a second apparatus for authorizing a first apparatus to access information about at least one spatial anchor, which is suitable for performing the method according to embodiments of the disclosure.

As shown in FIG. 15, a second apparatus 150 for authorizing a first apparatus to access information about at least one spatial anchor may include: a receiving unit 1502 configured for receiving, from the first apparatus, a first request for an authorization to access information about the at least one spatial anchor; and a transmitting unit 1504 configured for transmitting, to the first apparatus, a first response indicating the authorization. The first apparatus transmits, to a third apparatus, a second request based on at least the authorization, for accessing information about at least one spatial anchor.

In exemplary embodiments of the present disclosure, a second apparatus 150 for authorizing a first apparatus to access information about at least one spatial anchor is further configured for performing the method according to any of the embodiments above mentioned, such as shown in FIG. 5, 7, 8, 9.

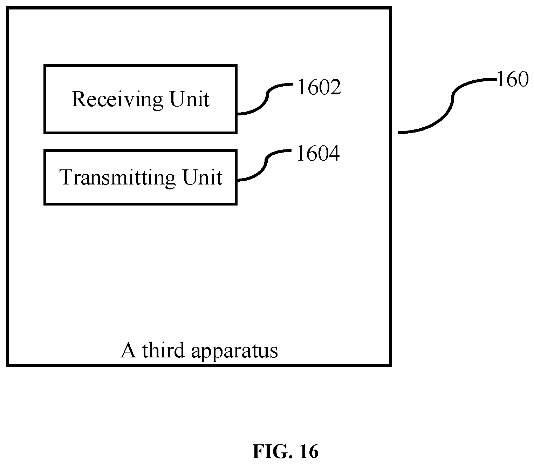

FIG. 16 is a block diagram showing exemplary apparatus units for a third apparatus for managing information about at least one spatial anchor, which is suitable for performing the method according to embodiments of the disclosure.

As shown in FIG. 16, a third apparatus 160 for managing information about at least one spatial anchor in an access network may include: a receiving unit 1602 configured for, receiving, from a first apparatus, a second request based on at least an authorization to access information about the at least one spatial anchor, for accessing information about at least one spatial anchor; and a transmitting unit 1604 configured for, transmitting, to the first apparatus, a second response. The first apparatus transmits, to a second apparatus, a first request for the authorization. The first apparatus receives, from the second apparatus, a first response indicating the authorization.

In exemplary embodiments of the present disclosure, a third apparatus 160 for managing information about at least one spatial anchor in an access network is further configured for performing the method according to any of the embodiments above mentioned, such as shown in FIG. 6, 7, 8, 9.

The term 'unit' may have conventional meaning in the field of electronics, electrical devices and/or electronic devices and may include, for example, electrical and/or electronic circuitry, devices, modules, processors, memories, logic solid state and/or discrete devices, computer programs or instructions for carrying out respective tasks, procedures, computations, outputs, and/or displaying functions, and so on, as such as those that are described herein.

As used in the present disclosure, the term "circuitry" may refer to one or more or all of the following:
(a) hardware-only circuit implementations (such as implementations in only analogy and/or digital circuitry) and
(b) combinations of hardware circuits and software, such as (as applicable):
   (i) a combination of analogy and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation."

This definition of circuitry applies to all uses of this term in the present disclosure, including in any claims. As a further example, as used in the present disclosure, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

With these units, the apparatus may not need a fixed processor or memory, any kind of computing resource and storage resource may be arranged from at least one node/device/entity/apparatus relating to the communication system. The virtualization technology and network computing technology (e.g., cloud computing) may be further introduced, so as to improve the usage efficiency of the network resources and the flexibility of the network.

The techniques described herein may be implemented by various means so that an apparatus implementing one or more functions of a corresponding apparatus described with an embodiment comprises not only prior art means, but also means for implementing the one or more functions of the corresponding apparatus described with the embodiment and it may comprise separate means for each separate function, or means that may be configured to perform two or more functions. For example, these techniques may be implemented in hardware (one or more apparatuses), firmware (one or more apparatuses), software (one or more modules/units), or combinations thereof. For a firmware or software, implementation may be made through modules (e.g., procedures, functions, and so on) that perform the functions described herein.

In certain embodiments, some or all of the functionality described herein may be provided by processing circuitry executing instructions stored on in memory, which in certain embodiments may be a computer program product in the form of a non-transitory computer-readable storage medium. In alternative embodiments, some or all of the functionalities may be provided by the processing circuitry without executing instructions stored on a separate or discrete device-readable storage medium, such as in a hard-wired manner. In any of those particular embodiments, whether executing instructions stored on a non-transitory computer-readable storage medium or not, the processing circuitry can be configured to perform the described functionality. The benefits provided by such functionality are not limited to the processing circuitry alone or to other components of the computing device, but are enjoyed by the computing device as a whole, and/or by end users and a wireless network generally.

The term "non-transitory," as used herein, is a limitation of the medium itself (i.e., tangible, not a signal) as opposed to a limitation on data storage persistency (e.g., RAM vs. ROM).

As described in above exemplary embodiments of this disclosure, embodiments herein afford many advantages. According to embodiments of the present disclosure, the exemplary embodiments of the present disclosure propose a mechanism that provides specifical procedures for accessing information about spatial anchor. According to embodiments of the present disclosure, an authorization for accessing information about the spatial anchor is needed. The security of metaverse service may be improved.

It should be understood that the above embodiments are only for illustration but not limitation. The present disclosure may be carried out in other ways than those specifically set forth herein without departing from essential characteristics of the disclosure. All changes to these embodiments not departing from the meaning and equivalency of the appended claims are intended to be comprised herein.

The following documents may be incorporated in entirety by reference.
3GPP TR 23.700-21 V0.2.0 (2024-02)
3GPP TS 33.434 V18.2.0 (2024-03)

| ABBREVIATION | EXPLANATION |
|---|---|
| AR | Augmented reality |
| 3GPP | 3rd generation partnership project |
| SA6 | 3rd generation partnership project technical specification group service and system aspects working group 6 (3GPP TSG SA WG 6) |
| TR | Technical Report |
| 5GC | 5th Generation Core Network |
| LM | Location Management |
| SEAL | Service Enabler Architecture Layer for Verticals |
| UE | user equipment |
| KI | Key Issue |
| TLS | Transport Layer Security |
| VAL | Vertical application layer |
| VAL Server | Vertical Application Layer Server |
| VAL Client | Vertical Application Layer Client |
| SEAL-S | Seal Server |
| SEAL-C | Seal Client |
| SIM | SEAL Identity Management |
| SIM-S | SIM Server |
| SIM-C | SIM Client |
| CRUD | Create Read Update Delete |
| OIDC | Open ID connect |
| OAuth 2.0 | Open Authorization Version 2 |
| MMEC | Mobile metaverse Enabler Client |
| MMES | Mobile metaverse Enabler Server |
| 5G | fifth generation |
| NR | New Radio |
| 6G | sixth generation |
| RRC | Radio Resource Control |
| Rel | Release |
| DL | Downlink |
| UL | Uplink |

## Claims

1. A method (400) performed by a first apparatus for accessing information about at least one spatial anchor, comprising:
transmitting (S402), to a second apparatus, a first request for an authorization to access information about the at least one spatial anchor;
receiving (S404), from the second apparatus, a first response indicating the authorization;
transmitting (S406), to a third apparatus, a second request based at least on the authorization, for accessing information about at least one spatial anchor; and
receiving (S408), from the third apparatus, a second response.

2. The method (400) according to claim 1,
wherein the first response comprises an authorization code, and/or an access token; and/or
wherein the first request and/or the second request includes at least one of: an identity of the first apparatus, an operation to the at least one spatial anchor, an identity of the at least one spatial anchor, a location area of interest, a user preference, and/or information for filter.

3. The method (400) according to claim 2,
wherein the first response further comprises an identity token; and
wherein the identity token comprises: information about the first apparatus and/or information about a metaverse service related to a spatial anchor.

4. The method (400) according to claim 2 or 3, wherein one of:
the second request is for discovering and/or managing the at least one spatial anchor, and the second apparatus stores a list of spatial anchor identities mapped for the first apparatus, and/or a user represented by the first apparatus; or
the second request is for a management of information about the at least one spatial anchor, and the management comprises at least one operation of: creating, reading, updating, and/or deleting.

5. The method (400) according to any of claims 2 to 4,
wherein the authentication is an open identity connect, OIDC, authentication; or
wherein the authentication is from a common application program interface framework for 3^{rd} generation partnership project northbound application program interface, CAPIF, core function.

6. The method (400) according to any of claims 2 to 5, wherein one of:
(1) when the first response comprises the authorization code, the first apparatus transmits, to the second apparatus, a third request including the authorization code; the first apparatus receives, from the second apparatus, a third response including the access token based at least on the authorization code; and the second request includes the access token; or
(2) when the first response comprises an authorization code, the first apparatus transmits the authorization code to a fourth apparatus; the fourth apparatus transmits the authorization code to the second apparatus; the fourth apparatus receives the access token from the second apparatus; and the first apparatus comprises: a vertical application layer user equipment, VAL UE, and the fourth apparatus comprises: a VAL server; or
(3) when the first response comprises the access token, the second request comprises the access token.

7. The method (400) according to any of claims 2 to 6, wherein the access token comprises at least one of:
an expiration time, an authentication scope, and/or an identity of the first apparatus.

8. The method (400) according to claim 7, wherein the access token further comprises at least one of:
at least one list of spatial anchor identities allowed for the first apparatus to access, at least one allowed location and orientation of the first apparatus, a validity period of a spatial anchor, an indication of a metaverse service associated to a spatial anchor, an allowed type of a spatial anchor, an allowed discoverable visibility level of a spatial anchor, and/or an access level of the first apparatus.

9. The method (400) according to any of claims 2 to 7, wherein the third apparatus validates the access token by checking at least one of:
whether a location and/or an orientation of the first apparatus to a spatial anchor to be accessed by the first apparatus is allowed;
whether the spatial anchor to be accessed by the first apparatus is inside an allowed location.

10. The method (400) according to claim 9, wherein the third apparatus validates the access token by further checking at least one of:
a validity of an access token for the spatial anchor to be accessed by the first apparatus;
a security dependency of the spatial anchor to be accessed by the first apparatus to at least one metaverse service;
a version of the spatial anchor to be accessed by the first apparatus;
a metadata keyword in the access token; and/or
an issuer of the access token, an authorization scope of the first apparatus, an identity of the first apparatus, and/or an access control rule associated with the at least spatial anchor.

11. The method (400) according to any of claims 1 to 10,
wherein the first apparatus comprises at least one of: a vertical application layer user equipment, VAL UE, a service enabler architecture layer for verticals identity management client, SIM-C, a vertical application layer server, VAL server, a mobile metaverse enabler client, MMEC, and/or a service enabler architecture layer for verticals client, SEAL-C;
wherein the second apparatus comprises: a service enabler architecture layer for verticals identity management server, SIM-S, and/or a CAPIF core function; and/or
wherein the third apparatus comprises: a mobile metaverse enabler server, MMES, or a service enabler architecture layer for verticals server, SEAL-S.

12. A method (500) performed by a second apparatus for authorizing a first apparatus to access information about at least one spatial anchor, comprising:
receiving (S502), from the first apparatus, a first request for an authorization to access information about the at least one spatial anchor; and
transmitting (S504), to the first apparatus, a first response indicating the authorization.
wherein the first apparatus transmits, to a third apparatus, a second request based on at least the authorization, for accessing information about at least one spatial anchor.

13. A first apparatus (100) for accessing information about at least one spatial anchor, comprising:
at least one processor (1002); and
at least one memory (1004) including computer program code;
the at least one memory (1004) and the computer program code configured to, with the at least one processor (1002), cause the first apparatus (100) at least to perform the method according to any of claims 1 to 11.

14. A second apparatus (110) for authorizing a first apparatus to access information about at least one spatial anchor, comprising:
at least one processor (1102); and
at least one memory (1104) including computer program code;
the at least one memory (1104) and the computer program code configured to, with the at least one processor (1102), cause the second apparatus (110) at least to perform the method according to claim 12.

15. A computer-readable storage medium (130) storing instructions (1301), which when executed by at least one processor of an apparatus, cause the at least one processor of the apparatus to perform at least the method according to any of claims 1 to 12.
